## Europäisches Patentamt
## European Patent Office
## Office européen des brevets

(19)

(11) Veröffentlichungsnummer: **0 151 424**
**B1**

(12)

# EUROPÄISCHE PATENTSCHRIFT

(45) Veröffentlichungstag der Patentschrift:
30.03.88

(51) Int. Cl.⁴: **F 16 D 43/28**, F 16 D 25/14

(21) Anmeldenummer: **85100555.3**

(22) Anmeldetag: **19.01.85**

(54) Ventilssystem für eine hydraulisch gesteuerte Anfahr-Reibungskupplung, insbesondere für Kraftfahrzeuge.

(30) Priorität: **08.02.84 DE 3404378**

(43) Veröffentlichungstag der Anmeldung:
**14.08.85 Patentblatt 85/33**

(45) Bekanntmachung des Hinweises auf die Patenterteilung:
**30.03.88 Patentblatt 88/13**

(84) Benannte Vertragsstaaten:
**BE DE FR GB IT NL SE**

(56) Entgegenhaltungen:
DE - B - 1 555 318
DE - B - 2 539 523
DE - C - 3 130 050
FR - A - 2 340 487
NL - A - 8 204 106
US - A - 3 862 676

(73) Patentinhaber: **FORD-WERKE AKTIENGESELLSCHAFT,**
**Ottoplatz 2 Postfach 21 03 69, D-5000 Köln 21 (DE)**
(84) Benannte Vertragsstaaten: **BE DE IT NL SE**

(73) Patentinhaber: **FORD MOTOR COMPANY LIMITED,**
**Eagle Way, Brentwood Essex CM13 3BW (GB)**
(84) Benannte Vertragsstaaten: **GB**

(73) Patentinhaber: **FORD FRANCE SOCIETE ANONYME,**
**344 Avenue Napoléon Bonaparte B.P. 307, F-92506 Ruell**
**Malmaison Cedex (FR)**
(84) Benannte Vertragsstaaten: **FR**

(72) Erfinder: **Bilharz, Manfred, Nikolaus-Adam-Strasse 71,**
**D-5010 Berghelm (DE)**
Erfinder: **Helder, Peter, Brüsseler Strasse 54,**
**D-5354 Wellerswist (DE)**
Erfinder: **Röper, Hartmut, Dr., Salzburger Strasse 4,**
**D-4019 Monheim (DE)**
Erfinder: **Taal, Martin, Von Humboldt-Strasse 27,**
**D-5024 Pulheim (DE)**
Erfinder: **Henken, Fritz, Christianstrasse 11,**
**D-5024 Pulheim (DE)**
Erfinder: **Kohl, Ernst, Oberländer Ufer 150B,**
**D-5000 Köln 51 (DE)**
Erfinder: **Schubert, Dietmar, Am Kochstor 14,**
**D-5202 Hennef (DE)**

(74) Vertreter: **Ritzkowsky, Harald, Dipl.-Ing., Ford-Werke**
**Aktiengesellschaft Patentabteilung**
**Z/DRR-2 Ottoplatz 2, D-5000 Köln 21 (DE)**

ACTORUM AG

## Beschreibung

Die Erfindung bezieht sich auf ein Ventilsystem für eine hydraulisch gesteuerte Anfahr-Reibungskupplung, insbesondere für Kraftfahrzeuge, der im Oberbegriff des Patentanspruchs erläuterten Art.

Aus der DE-B-1555318 ist ein Ventilsystem für eine hydraulisch gesteuerte Anfahr-Reibungskupplung, insbesondere für Kraftfahrzeuge bekannt, das ein Kupplungsdruck-Steuerventil aufweist, das den Kupplungsdruck während der Anfahrphase in Abhängigkeit von der Drehmomentanforderung des Fahrers steuert, und in dem ein Ventil vorgesehen ist, das das Kupplungsdruck-Steuerventil in Abhängigkeit von der Abtriebsdrehzahl übersteuert.

Bei dem bekannten Ventilsystem wird das den Kupplungsdruck drehmomentabhängig steuernde Kupplungsdruck-Steuerventil von einem fahrgeschwindigkeitsabhängigen Ventil übersteuert, sobald ein an der Abtriebswelle angeordnetes Fahrgeschwindigkeit-Reglerventil ein Drucksignal liefert, das anzeigt, dass eine vorbestimmte Fahrgeschwindigkeit des Kraftfahrzeuges überschritten ist. Die auf ein weiches Anfahrverhalten ausgelegte Anfahrsteuerung wird oberhalb einer bestimmten Fahrgeschwindigkeit ausgeschaltet, um sicherzustellen, dass bei einem weiteren Gangwechsel ein ausreichender Kupplungsdruck aufrechterhalten bleibt, auch wenn bei einer Aufwärtsschaltung keine Drehmomentanforderung des Fahrers vorliegt, d.h. das Gaspedal losgelassen ist.

Bei dem bekannten Ventilsystem kann daher der Nachteil auftreten, dass bei einem Anfahrvorgang des Kraftfahrzeuges das auf die Antriebsräder übertragene Drehmoment nicht ausreicht, um das Fahrzeug genügend schnell in Bewegung zu setzen, und zwar entweder durch eine zu geringe Drehmomentanforderung des Fahrers oder durch zu hohe Anfahrwiderstände, zum Beispiel an starken Steigungen, im Anhängerbetrieb und so weiter, so dass die Anfahr-Reibungskupplung über einen grösseren Zeitraum im Schlupfzustand verbleibt, wodurch es zu einer erheblichen Erwärmung der Reibungsflächen und schliesslich zu einem Verbrennen und Zerstören der Reibungskupplung kommen kann.

Aus der US-A-3862676 ist ein Ventilsystem für eine hydraulisch gesteuerte Anfahr-Reibungskupplung, insbesondere für Kraftfahrzeuge bekannt, dass eine Kupplungsdruckregelung in Abhängigkeit von der Stellung der Drosselklappe und der Drehzahl des Verbrennungsmotors vorgenommen wird, um während der Anfahr-Schlupfphase eine gute Schmierung der Reibscheiben zu gewährleisten.

Dieses bekannnte Ventilsystem vermeidet zwar ein übermässiges Erhitzen oder Verbrennen der Reibscheiben, es ermöglicht jedoch keine Schlupfzeitbegrenzung, um die Dauer eines Anfahrvorganges bzw. einer Schlupfphase zeitlich zu begrenzen, wenn sie aufgrund von ungünstigen Lastverhältnissen dazu neigt, über längere Zeit anzudauern.

Die Aufgabe der Erfindung ist es, ein Ventilsystem für eine hydraulisch gesteuerte Anfahr-Reibungskupplung, insbesondere für Kraftfahrzeuge, zu schaffen, in der eine als Schlupfzeitbegrenzer wirksame Ventilanordnung vorgesehen ist, die ein Verbrennen der Reibungskupplung während eines mit einem unzureichenden Drehmoment eingeleiteten Anfahrvorganges verhindert.

Gemäss der Erfindung wird diese Aufgabe gelöst, indem ein Ventilsystem gemäss dem Oberbegriff des Patentanspruchs die im Kennzeichenteil des Patentanspruchs aufgezeigten Merkmale aufweist.

Bei einem Ventilsystem gemäss dem ersten Teil des Patentanspruchs 1 kann die erfindungsgemässe Aufgabe auf einfachere Weise mit den Massnahmen im Kennzeichenteil des Anspruchs 2 gelöst werden.

Im Anspruch 3 ist eine zweckmässige Ausgestaltung gekennzeichnet.

Dadurch, dass dem Kupplungsdruck-Steuerventil eine Ventilanordnung, bestehend aus einem Vorventil, einem Akkumulator und einem Schaltventil zugeordnet ist, wobei das Vorventil einen Ventilkörper mit zwei Steuerbünden aufweist, zwischen denen der Kupplungsdruck zugeführt wird und am Ventilkörper am einen Ende ein von der Antriebsdrehzahl abhängiges Drucksignal und am anderen Ende ein von der Abtriebsdrehzahl abhängiges Drucksignal sowie eine Feder einwirkt, derart, dass bei hoher Drehzahldifferenz zwischen An- und Abtrieb der Kupplungsdruck über eine Leitung zum Akkumulator durchgeschaltet wird, dessen Kolben sich infolge der durch die Kolbenstange vorliegenden Flächendifferenz und verzögert durch Drosselstellen bewegt und auf den Ventilkörper des Schaltventiles einwirkt und aus seiner den Leitungsdruck absperrenden Ausgangslage in seine den Leitungsdruck über einen Kanal und ein Kugelwechselventil zum Kupplungsdruck-Steuerventil führenden Schaltlage bewegt, wird eine Schlupfzeitbegrenzung für die Anfahr-Reibungskupplung erzielt, die in Abhängigkeit von der für die Erwärmung und die Gefahr eines Verbrennens der Anfahr-Reibungskupplung wesentlichen Drehzahldifferenz nach einer vorgegebenen Zeit eine Erhöhung des Kupplungsdruckes bewirkt, wodurch die Drehzahl und damit die Leistung des Motors stark gesenkt wird, was einerseits den Fahrer aufmerksam macht und andererseits die Reibungskupplung vor Schaden bewahrt, da sie bei abgesenkter Drehzahl weniger Reibungswärme aufzunehmen hat.

Die Erfindung wird anhand eines in der beiliegenden Zeichnung gezeigten Ausführungsbeispieles näher erläutert.

Es zeigt:

Fig. 1 eine Ausführung des Ventilsystems gemäss der Erfindung schematisch dargestellt;

Fig. 2 eine weitere vereinfachte Ausführung des Ventilsystems der Erfindung.

Ein Kupplungsdruck-Steuerventil 1 besteht aus einem in einer Ventilbohrung 2 angeordneten Ventilkörper 3, der zwei Steuerbünde 4 und 5 aufweist und durch eine Druckfeder 6 an einem Ende belastet ist. Eine Leitungsdruck von einer Druckmittelquelle zur Kupplung führende Leitung 7 ist über Leitungen 8 und 9 benachbart dem Steuerbund 5 am Ventilkörper 3 mit der Ventilbohrung 2 des Kupplungsdruck-Steuerventiles 1 verbunden. Im vorliegenden Fall ist der Leitungsdruck P (LINE) gleich dem Kupplungsdruck $P_k$. Eine ein von der Antriebsdrehzahl abhängiges Drucksignal führende Leitung 10 ist über ein Kugelwechseventil 11 und eine Leitung 12 mit dem die Feder 6 aufnehmenden Ende der Ventilbohrung 2 verbunden. Benachbart der abliegenden Seite des Steuerbundes 4 sowie benachbart dem anderen Ende des Ventilkörpers 3 sind Auslassleitungen Ex vorgesehen.

Die gemäss der Erfindung als Schlupfzeitbegrenzer wirksame Ventilanordnung besteht aus einem Vorventil 13, einem Akkumulator 14 und einem Schaltventil 15. Das Vorventil 13 besteht aus einem in einer Ventilbohrung 16 angeordneten Ventilkörper 17 mit zwei Steuerbünden 18 und 19 und einer Feder 20. Der Ventilkörper 17 wird über die Feder 20 in einer Ausgangslage gehalten, in der er den über eine Leitung 21 bei in eine Fahrstufe, z.B. D, L oder R bewegtem Handwählhebel anstehenden Kupplungsdruck $P_k$ (D, L, R) absperrt. Der Ventilkörper 17 ist an seinem einen Ende über eine Leitung 22 mit einem von der Antriebsdrehzahl abhängigen Drucksignal und an seinem anderen Ende über eine Leitung 23 mit einem von der Antriebsdrehzahl abhängigen Drucksignal beaufschlagt. Im Bereich zwischen den Steuerbünden 18 und 19 führt eine Leitung 24 über eine Drosselstelle 28a zum Akkumulatorventil 14 bzw. ist ein Auslass Ex vorgesehen.

Der Akkumulator 14 besteht aus einem in einer Ventilbohrung 25 verschiebbaren Kolben 26 dessen Kolbenstange 27 so bemessen wird, dass eine gewünschte Differenzfläche in den wirksamen Flächen am Kolben 26 auftritt. Das Druckmittel innerhalb der Ventilbohrung 25 des Akkumulators 14 wird bei einer Bewegung des Kolbens 26 über eine Drosselstelle 28b verdrängt, an der bei laufendem Motor Kupplungsdruck $P_k$ anliegt.

Das Schaltventil 15 besteht aus einem in einer Ventilbohrung 29 angeordneten Ventilkörper 30, der einen Steuerbund 31 aufweist und über eine Feder 32 belastet ist. Der Ventilkörper 30 weist weiterhin eine Innenbohrung 33 auf, in der sich die Kolbenstange 27 des Akkumulators 14 zunächst frei bewegen kann, bis sie nach nahezu völligem Durchlauf des Kolbenhubes auf den Boden der Mittenbohrung 33 trifft und sodann den Ventilkörper 30 entgegen der Kraft der Feder 32 bewegen kann. Der Steuerbund 31 des Ventilkörpers 30 sperrt hierbei in seiner Ausgangslage eine Leitung 34 ab, die Leitungsdruck P (LINE) von der Druckmittelquelle führt.

Die beiden Enden der Ventilbohrung 29 sind über Auslässe Ex entlastet. Von der Ventilbohrung 29 des Schaltventiles 15 führt eine Leitung 35 zum Kugelwechselventil 11.

Die in ihrem schematischen Aufbau erläuterte Ventilanordnung ermöglicht folgende Funktionsweise.

Der Kupplungsdruck wird durch ein Kräftegleichgewicht am Kupplungsdruck-Steuerventil 1 eingestellt. Übersteigt der Kupplungsdruck seinen Sollwert, so wird der Ventilkörper 3 in der Figur gesehen nach links verschoben, bis der Auslass Ex freigegeben wird. Der abfliessende Volumenstrom lässt den Druck sinken, und das Ventil wandert wieder nach rechts. Die Höhe des Kupplungsdruckes wird durch das auf das linke Ende des Ventilkörpers 3 einwirkende, von der Antriebsdrehzahl abhängige Drucksignal und die Kraft der Feder bestimmt.

Im Normalbetrieb wirkt das von der Antriebsdrehzahl abhängige Drucksignal über die Leitung 10, das Kugelwechselventil 11 und die Leitung 12 auf das linke Ende des Ventilkörpers 3 ein. Zu diesem Zeitpunkt ist eine Verbindung zwischen der Leitungsdruck P (LINE) führenden Leitung 34 über das Schaltventil 15 zur Leitung 35 gesperrt.

Tritt nun während eines Anfahrvorganges zwischen der Antriebsdrehzahl und der Abtriebsdrehzahl innerhalb der Kupplung eine vorbestimmte Drehzahldifferenz auf, so wird über das Vorventil 13 und das Akkumulatorventil 14 nach einer bestimmten, durch die Wahl der Drosselöffnung 28a und 28b und den Kolbendurchmesser des Kolbens 26 des Akkumulators 14 beeinflussbaren Zeit über das Schaltventil 15 eine schaltende Ventilbewegung ausgelöst. Diese Zeit ist um so kürzer, je höher die sich während des Anfahrvorganges einstellende Motordrehzahl ist.

Durch die entsprechende Dimensionierung der Feder 20 im Vorventil 13 und der Drosselstelle 28a am Eingang und der Drosselstelle 28b am Ausgang des Akkumulators 14 kann die erfindungsgemässe Schlupfzeitbegrenzung so eingestellt werden, dass bei den verschiedensten Betriebsbedingungen eine Beschädigung der Anfahr-Reibungskupplung sicher ausgeschlossen wird, ohne dass ein rechtzeitiges Eingreifen des Fahrers hierzu erforderlich ist.

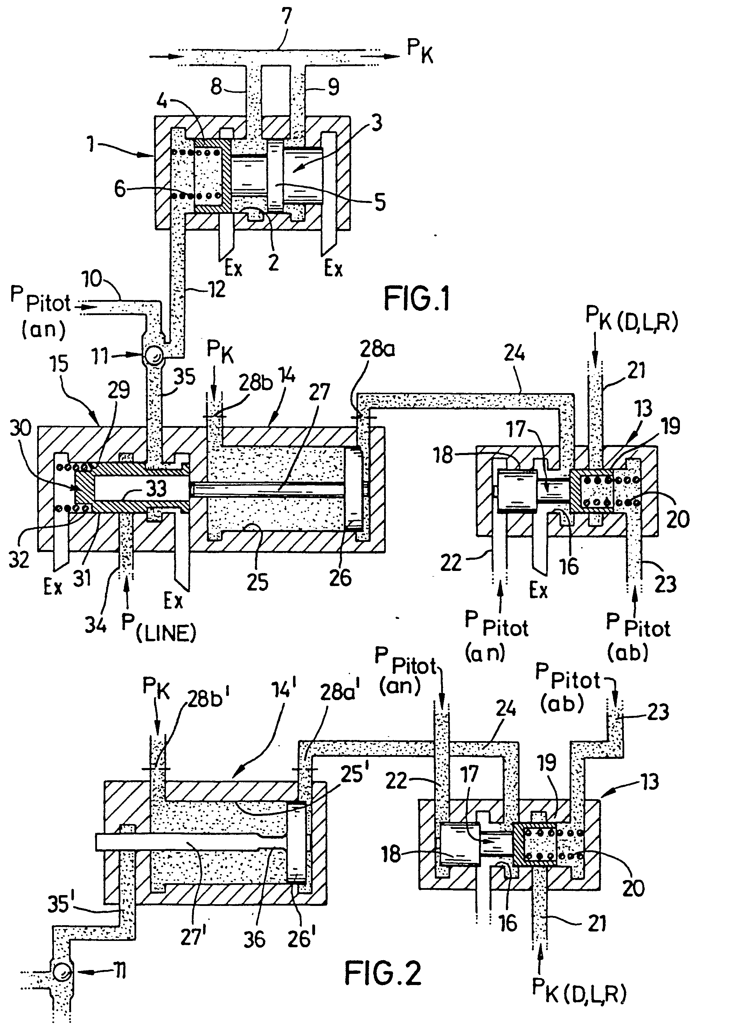

Bei der in Figur 2 gezeigten Ausführung wird das Ventilsystem gemäss der Erfindung vereinfacht, indem nur das Vorventil 13, das den gleichen Aufbau wie in Figur 1 beschrieben aufweist, mit einem etwas veränderten Akkumulator 14' kombiniert wird.

Der veränderte Akkumulator 14' besteht wieder aus einem in einer Ventilbohrung 25' verschiebbaren Kolben 26', dessen Kolbenstange 27' so bemessen wird, dass eine gewünschte Differenzfläche in den wirksamen Flächen am Kolben 26' auftritt. Der durchgeschaltete Kupplungsdruck $P_k$ (D, L, R) aus der Leitung 24 tritt über eine Drosselstelle 28a' in die Ventilbohrung 25' des Akkumulators 14' ein und verdrängt das darin befindliche Druckmittel kann über eine Drosselstelle 28b' am Ausgang der Ventilbohrung 25'.

Die Kolbenstange 27' des Kolbens 26' des Akkumulators 14' wird hierbei durch einen Anschlussbereich der Leitung 35' geführt, die zum Kugelwechselventil 11 führt. Die Kolbenstange 27' ist hierbei benachbart ihrem Kolben 26' mit Überströmnuten 36 versehen, die sobald der Kolben seinen Kolbenhub durchlaufen hat, eine Verbindung zwischen der Ventilbohrung 25' und der Leitung 35' zum Kugelwechselventil 11 herstellen. Damit wird der in der Ventilbohrung 25' vorliegende Kupplungsdruck $P_k$ (D, L, R) unmittelbar zum Kupplungsdruck-Steuerventil geführt.

Auf eine zweckmässige Ausgestaltung der Steuerbünde 18 und 19 am Vorventil 13 soll noch hingewiesen werden. Der Steuerbund 19 wird hierbei etwas grösser ausgeführt als der Steuerbund 18, so dass durch die Umschaltung des Kupplungsdruckes $P_k$ (D, L, R) und dem darauffolgenden Absinken de Motordrehzahl unterhalb der vorbestimmten Drehzahldifferenz, das Vorventil 13 dennoch in seiner Schaltlage verbleibt und nicht zu pendeln beginnt.

**Patentansprüche**

1. Ventilsystem für eine hydraulisch gesteuerte Anfahr-Reibungskupplung, insbesondere für Kraftfahrzeuge, mit einem Kupplungsdruck-Steuerventil (1), das den Kupplungsdruck $P_k$ während der Anfahrphase in Abhängigkeit von der Drehmoment-Anforderung des Fahrers steuert, und mit einem Ventil, das das Kupplungsdruck-Steuerventil (1) in Abhängigkeit von der Abtriebsdrehzahl übersteuert, dadurch gekennzeichnet, dass dem Kupplungsdruck-Steuerventil (1) eine Ventilanordnung bestehend aus einem Vorventil (13), einem Akkumulator (14) und einem Schaltventil (15), zugeordnet ist, wobei das Vorventil (13) einen Ventilkörper (17) mit zwei Steuerbünden (18 und 19) aufweist, zwischen denen der Kupplungsdruck $P_k$ (D, L, R) zugeführt wird und am Ventilkörper (17) am einen Ende über eine Leitung (22) ein von der Antriebsdrehzahl abhängiges Drucksignal $P_{pitot}$ an und am anderen Ende über eine Leitung (23) ein von der Antriebsdrehzahl abhängiges Drucksignal $P_{pitot}$ ab sowie eine Feder (20) einwirkt, derart, dass bei hoher Drehzahldifferenz zwischen An- und Abtrieb der Kupplungsdruck $P_k$ (D, L, R) über eine Leitung (24) zum Akkumulator (14) durchgeschaltet wird, dessen Kolben (26) sich infolge der durch die Kolbenstange (27) gegebenen Flächendifferenz und verzögert durch Drosselstellen (28a und 28b) am Ein- und Auslass seiner Ventilbohrung (25) bewegt und erst kurz vor Abschluss des Kolbenhubes am Ende der Innenbohrung (33) auf den Ventilkörper (30) des Schaltventiles (15) einwirkt und diesen aus seiner den Leitungsdruck P (LINE) von der Druckmittelquelle in der Leitung (34) absperrenden Ausgangslage in seine Schaltlage bewegt, in der das Druckmittel über eine Leitung (35) und ein Kugelwechselventil (11) unmittelbar über eine Leitung (12) zum Kupplungsdruck-Steuerventil (1) geführt wird.

2. Ventilsystem nach dem ersten Teil des Patentanspruchs 1, dadurch gekennzeichnet, dass dem Kupplungsdruck-Steuerventil (1) eine Ventilanordnung, bestehend aus einem Vorventil (13) und einem Akkumulator (14') zugeordnet ist, wobei das Vorventil (13) einen Ventilkörper (17) mit zwei Steuerbünden (18 und 19) aufweist, zwischen denen der Kupplungsdruck $P_k$ (D, L, R) zugeführt wird und am Ventilkörper (17) am einen Ende über eine Leitung (22) ein von der Antriebsdrehzahl abhängiges Drucksignal $P_{pitot}$ (an) und am anderen Ende über eine Leitung (23) ein von der Abtriebsdrehzahl abhängiges Drucksignal $P_{pitot}$ (ab) sowie eine Feder (20) einwirkt, derart, dass bei hoher Drehzahldifferenz zwischen An- und Abtrieb der Kupplungsdruck $P_k$ (D, L, R) über eine Leitung (24) zum Akkumulator (14') durchgeschaltet wird, dessen Kolben (26') sich infolge der durch die Kolbenstange (27') ergebenden Flächendifferenz und verzögert durch Drosselstellen (28a und 28b) am Ein- und Ausgang seiner Ventilbohrung (25') bewegt und wobei an der Kolbenstange (27') benachbart dem Kolben (26') Überströmnuten (36) vorgesehen sind, die nach Durchlauf des Kolbenhubes eine Verbindung zwischen der Ventilbohrung (25') und einer Leitung (35') zum Kugelwechselventil (11) zum Durchschalten des Kupplungsdruckes $P_k$ (D, L, R) herstellen.

3. Ventilsystem nach den Ansprüchen 1 oder 2, dadurch gekennzeichnet, dass die am Vorventil (13) vorgesehenen Steuerbünde (18 und 19) mit unterschiedlichen Flächen ausgeführt sind, derart, dass der Steuerbund (19) etwas grösser als der Steuerbund (18) ist, so dass bei einem durch das Umschalten des Leitungsdruckes P (LINE) bzw. des Kupplungsdruckes $P_k$ (D, L, R) eintretenden Absinken der Motordrehzahl unterhalb der vorbestimmten Drehzahldifferenz das Vorventil (13) in seiner Schaltlage bleibt.

**Claims**

1. A valve system for a hydraulically controlled starting friction clutch, in particular for motor vehicles, with a clutch pressure control valve (1) controlling the clutch pressure $P_K$ during the starting phase in dependence on the torque demand of the driver and with a valve overriding the clutch pressure control valve (1) in dependence on the output speed, characterized in that a valve arrangement consisting of a first valve (13), an accumulator (14) and a switch valve (15) is allocated to the clutch pressure control valve (1), the first valve (13) comprising a valve member (17) with two control lands (18 and 19) between which the clutch pressure $P_{K(D, L, R)}$ is applied and where the valve member (17) is acted upon at one end by way of a line (22) by an input-speed dependent pressure signal $P_{pitot(an)}$ and at the other end by a spring (20) and by way of a line (23) by an output-speed dependent pressure signal $P_{pitot(ab)}$, so that at a large difference between in- and output speed the clutch pressure $P_{K(D, L, R)}$ is fed by way of a line (24) through to the accumulator (14) whose piston (26) is displaced owing to the difference in area defined by the piston rod (27) and retarded by the orifices (28a and 28b) at the in- and outlet of its valve bore (25), the piston rod (27) acting upon the valve member (30) of the switch valve (15) only just before completion of the piston stroke at the end of the inner bore (33) and moving the valve member (30) from its rest position in which it shuts off the line pressure $P_{(LINE)}$ from the pressure source in line (34) to its operating position, in which the pressure medium is fed by way of a line (35) and a ball shuttle valve (11) directly by way of a line (12) to the clutch pressure control valve (1).

2. A valve system according to the first part of claim 1, characterized in that a valve arrangement consisting of a first valve (13) and an accumulator (14') is allocated to the clutch pressure control valve (1), the first valve (13) comprising a valve member (17) with two control lands (18 and 19) between which the clutch pressure $P_{K(D, L, R)}$ is applied and where the valve member (17) is acted upon at one end by way of a line (22) by an input-speed dependent pressure signal $P_{pitot(an)}$ and at the other end by a spring (20) and by way of a line (23) by an output-speed pressure signal $P_{pitot(ab)}$ so that, at a large difference between input- and output speed, the clutch pressure $P_{K(D, L, R)}$ is fed by way of a line (24) through to the accumulator (14') whose piston (26') is displaced owing to the difference in area defined by the piston rod (27') and retarded by the orifices (28a and 28b) at the in- and outlet of its valve bore (25') and where the piston rod (27') is provided adjacent to the piston (26') with overflow grooves (36) which, as soon as the piston completes ists stroke, establish a connection between the valve bore (25') and a line (35') to the ball shuttle valve (11) for conveying the clutch pressure $P_{K(D, L, R)}$.

3. A valve system according to claim 1 or 2, characterized in that the control lands (18) and (19) provided in the first valve (13) are made with different areas, with the control land (19) somewhat larger than the control land (18), so that the first valve (13) remains in its operating position when a change of the line pressure $P_{(LINE)}$ or of the clutch pressure $P_{K(D, L, R)}$ causes the engine speed to drop below the predetermined speed difference.

**Revendications**

1. Système de valves pour un embrayage de démarrage à friction à commande hydraulique, notamment pour véhicules automobiles, comprenant une valve de commande de pression d'embrayage (1) qui commande la pression d'embrayage $(P_K)$ pendant la phase de démarrage, en fonction de la demande de couple du conducteur, et comprenant une valve qui prend la priorité sur la valve de commande de pression d'embrayage (1) en fonction de la vitesse de rotation de l'élément de sortie, caractérisé en ce qu'il est prévu, associé à la valve de commande de pression d'embrayage (1), un dispositif de valves composé d'une valve pilote (13) d'un accumulateur (14) et d'un valve de commutation (15), la valve pilote (13) comprenant un élément de valve (17) qui possède deux collerettes de commande (18 et 19) entre lesquelles la pression d'embrayage $(P_K(D, L, R))$ est introduite, cependant que, sur l'une des extrémités de l'élément de valve (17) s'exerce l'action d'un signal de pression fonction de la vitesse de rotation d'entrée par l'intermédiaire d'une conduite (22) et que, sur l'autre extrémité, s'exercent l'action d'un signal de pression $(P_{pitot-ab})$ fonction de la vitesse de rotation de sortie, par l'intermédiaire d'une conduite (23) ainsi que celle d'un ressort (20), de telle sorte qu'en présence d'une grande différence de vitesse de rotation entre l'entrée et la sortie, la pression d'embrayage $(P_K(D, L, R))$ est envoyée par une conduite (24) à l'accumulateur (14) dont le piston (26) se déplace, par suite de la différence de surface qui résulte de la présence de la tige (27) du piston, et avec une vitesse ralentie par des étranglements (28a et 28b) prévus à l'entrée et à la sortie de son alésage de valve (25), et juste avant la fin de la course du piston, agit, à l'extrémité de l'alésage intérieur (33) sur l'élément (30) de la valve de commutation (15) et amène cet élément de sa position de départ, qui interrompt la transmission de la pression principale (P LINE) qui arrive de la source de fluide sous pression par la conduite (34), à sa position de commutation dans laquel le fluide sous pression est directement transmis à la valve de commande de la pression d'embrayage (1) par l'intermédiaire d'une conduite (35) et d'un sélecteur de circuit à bille (11), et par une conduite (12).

2. Système de valves selon la première partie de la revendication 1, caractérisé en ce qu'à la valve de commande de pression d'embrayage (1) est associé un dispositif à valves composé d'une valve pilote (13) et d'un accumulateur (14'), la valve pilote (13) comprenant un élément de valve (17) qui porte deux collerettes de commande (18 et 19) entre lesquelles la pression d'embrayage $(P_K(D, L, R))$ est introduite tandis que sur l'une des extrémités de l'élément (17) de la valve s'exerce l'action d'un signal de pression $(P_{pitot}(an))$ fonction de la vitesse de rotation d'entrée par l'intermédiaire d'une conduite (22) et que sur son autre extrémité s'exercent l'action d'un signal de pression $(P_{pitot}(ab))$ fonction de la vitesse de rotation de sortie par l'intermédiaire d'une conduite (23) ainsi que celle d'un ressort (20), de telle sorte que, en présence d'une grande différence de vitesse de rotation entre l'entrée et la sortie, la pression d'embrayage $(P_K(D, L, R,))$ est envoyée par une conduite (24), à l'accumulateur (14') dont le piston (26') se déplace par suite de la différence de pression qui résulte de la présence de la tige de piston (27'), et avec une vitesse ralentie par des étranglements (28a et 28b) prévus à l'entrée et à la sortie de son alésage de valve (25'), cependant qu'il est prévu, sur la tige de piston (27') à proximité du piston (26'), des gorges de passage (36) qui, après l'exécution de la course du piston, établissent une liaison entre l'alésage de valve (25') et une conduite (35') menant au sélecteur de circuit à bille (11), pour la transmission de la pression d'embrayage $(P_K(D, L, R))$.

3. Système de valves selon l'une des revendications 1 et 2, caractérisé en ce que les colerettes de commande (18, 19) prévues sur la valve pilote (13) sont réalisées (18, 19) prévues sur la valve pilote (13) sont réalisées avec des surfaces différentes de telle manière que la collerette de commande (19) soit un peu plus grande que la collerette de commande (18), de telle manière que, si la vitesse de rotation du moteur tombe au-dessous de la différence de la vitesse de rotation prédéterminée sous l'effet du changement de valeur de la pression principale P (LINE) ou de la pression d'embrayage ($P_K$(D, L, R)), la valve pilote (13) reste dans sa position de commutation.

0151424

FIG.1

FIG.2